# EUROPÄISCHE PATENTSCHRIFT

(11) **EP 2 531 272 B1**
(45) Veröffentlichungstag und Bekanntmachung des Hinweises auf die Patenterteilung: **30.03.2016**
(21) Anmeldenummer: 10781869.2
(22) Anmeldetag: 15.11.2010
(51) Int. Cl.: B01D 35/16, B01D 46/00

(54) **GEHÄUSETOPF ZUR AUFNAHME EINES FILTERELEMENTES IN EINER FILTEREINRICHTUNG**
HOUSING POT FOR ACCOMMODATING A FILTER ELEMENT IN A FILTER DEVICE
POT DESTINÉ À RECEVOIR UN ÉLÉMENT FILTRANT DANS UN DISPOSITIF DE FILTRATION

(30) Priorität: 02.02.2010 DE 102010006715
(43) Veröffentlichungstag der Anmeldung: 12.12.2012
(73) Patentinhaber: Mann + Hummel GmbH, 71638 Ludwigsburg (DE)
(72) Erfinder: HIRSCH, Melanie, 67346 Speyer (DE); VOGT, Frank, 67374 Hanhofen (DE)
(86) Internationale Anmeldenummer: PCT/EP2010/067485
(87) Internationale Veröffentlichungsnummer: WO 2011/095239

(56) Entgegenhaltungen:
- EP-A1- 0 553 919
- WO-A1-2005/079949
- DE-U- 7 026 232
- US-A- 2 230 408
- US-A- 2 646 884
- US-A- 3 450 146
- US-A- 4 707 168

## Beschreibung

Die Erfindung bezieht sich auf einen Gehäusetopf zur Aufnahme eines Filterelementes in einer Filtereinrichtung nach dem Oberbegriff des Anspruches 1.

### Stand der Technik

Bekannt sind Fluidfilter mit einem in einem Gehäusetopf aus Metall angeordneten Filterelement, das von dem zu reinigenden Fluid durchströmt wird. Das hohlzylindrische Filterelement wird radial von außen nach innen durchströmt, wobei der gereinigte Kraftstoff axial aus dem Inneren des Filterelements abgeleitet wird. Im Boden des topfförmigen Filtergehäuses befindet sich eine Austragseinrichtung, über die abgeschiedenes Wasser abgeleitet wird. Die Austragseinrichtung umfasst einen Leitungsstutzen, der mit dem Metall des Gehäusetopfes verschweißt ist. Das Einschweißen derartiger Stutzen oder Muttern birgt jedoch aufgrund der im Gehäuseinneren auftretenden Druckpulsationen die Gefahr von Materialversagen während der Lebensdauer der Filtereinrichtung.

Aus der EP0553919 A1 ist ein Ablaufventil in einem Behälter bekannt, welches eine Nietmutter mit einem verformbaren Mittelabschnitt umfasst, wobei die Nietmutter ein Gehäuse für das Ventil mitbildet.

Der Erfindung liegt die Aufgabe zugrunde, mit einfachen Maßnahmen einen Gehäusetopf zur Aufnahme eines Filterelements in einer Filtereinrichtung ohne Einschränkung der Lebensdauer mit einer Austragseinrichtung zu versehen.

### Offenbarung der Erfindung

Diese Aufgabe wird erfindungsgemäß mit den Merkmalen des Anspruches 1 gelöst. Die Unteransprüche geben zweckmäßige Weiterbildungen an.

Der erfindungsgemäße Gehäusetopf dient zur Aufnahme eines Filterelements in einer Filtereinrichtung, bei der es sich beispielsweise um einen Kraftstofffilter oder einen Wechselfilter mit Ablassschraube handelt, um eine Luftentölbox oder um ein Preline. Der Filtertopf ist üblicherweise zylindrisch ausgebildet, wobei im Rahmen der Erfindung auch abweichende Querschnittsgeometrien in Betracht kommen, beispielsweise ovale Querschnitte oder rechteckförmige Querschnitte, die gegebenenfalls abgerundete Schmalseiten aufweisen.

Die Austragseinrichtung umfasst eine als separates Bauteil ausgeführte Buchse, welche mit einem Formschlusselement, beispielsweise einem Kragen versehen ist, das in eine Ausnehmung im Boden des Gehäusetopfes einragt und den Rand, welcher die Ausnehmung im Boden begrenzt, formschlüssig umgreift. Erfindungsgemäß ist vorgesehen, dass die Buchse als Stanzmutter ausgebildet ist, die beispielsweise zur Aufnahme einer Ablassschraube oder eines ähnlichen Bauteils mit einem Innengewinde ausgeführt sein kann. Diese Ausführung hat den Vorteil, dass auf ein Verschweißen der Buchse im Boden des Gehäusetopfes verzichtet werden kann, wodurch auch die Gefahr einer pulsationskritischen Verbindung zwischen der Buchse und der Wandung des Gehäusetopfes reduziert ist. Darüber hinaus lässt sich die Verbindung zwischen Buchse und Gehäusetopf in einfacher, kostengünstiger und schnell durchzuführender Weise realisieren, da lediglich eine mechanische Verbindung vorgesehen ist, die beispielsweise mithilfe eines Pressstempels bzw. einer Matrize oder Ähnlichem hergestellt werden kann. Der Formschluss zwischen Formschlusselement der Buchse und dem die Ausnehmung im Boden begrenzenden Rand der Wandung erlaubt zugleich eine Verbindung mit hinreichender Sicherheit zur Aufnahme von Kräften einschließlich der Druckpulsationen, welche beispielsweise bei einem Einsatz als Kraftstofffilter in Brennkraftmaschinen auftreten.

Der vorzugsweise aus Metall bestehende Gehäusetopf ermöglicht das Einbringen der Ausnehmung im Topfboden im Wege des Stanzens. Mithilfe eines geeigneten Werkzeugs wie einem Pressstempel bzw. einer Matrize wird das Formschlusselement, insbesondere der Buchsenkragen so weit verformt, dass der Rand der Ausnehmung im Topfboden formschlüssig von dem umgebogenen Kragen umgriffen wird. Hierbei wird der Kragen axial von außen oder innen in die Ausnehmung eingeführt und anschließend radial nach außen gebogen, bis der Rand der Ausnehmung zwischen einer Schulter der Buchse und einer Kragenseitenwand eingeklemmt ist.

Zur Verbesserung der Dichtwirkung kann es zweckmäßig sein, zwischen dem Formschlusselement und dem Rand der Ausnehmung Dichtmaterial vorzusehen, entweder eine verformbare Dichtmasse, welche während des Montageprozesses zwischen dem Rand und dem Formschlusselement verteilt wird, oder als Dichtring, der um das Formschlusselement, insbesondere um den Kragen gelegt wird.

Das Formschlusselement an der Buchse ist vorzugsweise als ein sich in Achsrichtung erstreckender, verformbarer Kragen an der Buchse ausgeführt, der zur Herstellung des Formschlusses radial umgebogen wird.

Die Buchse weist eine zentrale Strömungsöffnung auf, welche koaxial zur Ausnehmung im Topfboden liegt und über die abgeschiedenes Fluid bzw. abgeschiedene Partikel aus dem Gehäusetopf ausgetragen werden können. Gemäß einer weiteren zweckmäßigen Ausführung ist vorgesehen, dass lediglich das Formschlusselement der Buchse in das Innere des Gehäusetopfes einragt, wohingegen der Buchsenkörper außerhalb des Gehäusetopfes liegt. Grundsätzlich genügt es für eine formschlüssige sowie strömungsdichte Verbindung zwischen Buchse und Gehäusetopf, dass lediglich das Formschlusselement der Buchse in das Gehäuseinnere einragt. Des Weiteren ist auch eine Ausführung möglich, bei der das Formschlusselement der Buchse außerhalb des Gehäusetopfes liegt und der Buchsenkörper in das Innere des Gehäusetopfes einragt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine Filtereinrichtung mit einem Gehäusetopf, in den ein Filterelement eingesetzt ist, wobei in den Boden des Gehäusetopfs eine Ausnehmung mit darin formschlüssig eingesetzter Stanzmutter eingebracht ist, dargestellt teilweise im Schnitt,
Fig. 2 die Stanzmutter im Schnitt in Einzeldarstellung,
Fig. 3 der Gehäusetopf mit der im Bodenbereich angeordneten Stanzmutter, dargestellt mit einer Matrize zum radialen Umbiegen eines Kragens der Stanzmutter,
Fig. 4 eine Ausführungsform, bei welcher der Buchsenkörper in das Innere des Gehäusetopfes einragt.

In den Figuren sind gleiche Bauteile mit gleichen Bezugszeichen versehen.

### Ausführungsform(en) der Erfindung

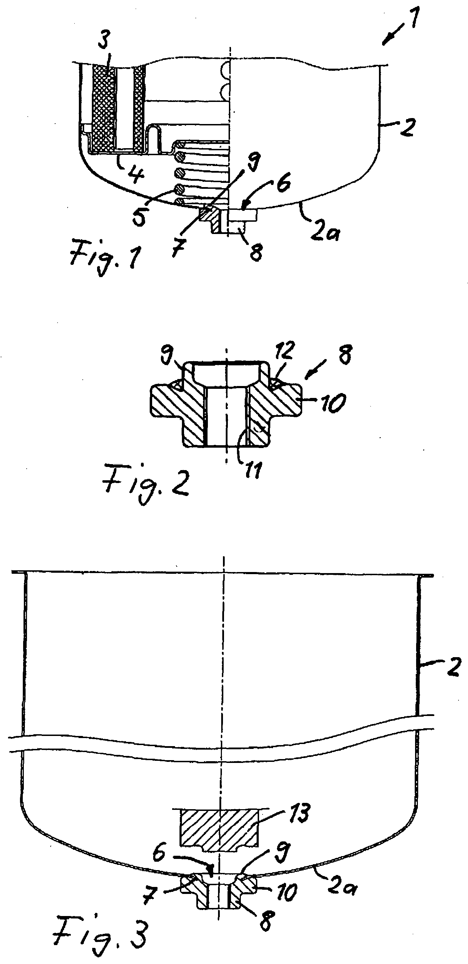

In Fig. 1 ist eine Filtereinrichtung 1 dargestellt, die als Flüssigkeitsfilter eingesetzt wird, beispielsweise zur Öl- oder Kraftstofffiltration in Kraftfahrzeugen. Die Filtereinrichtung 1 umfasst als Gehäuse einen Gehäusetopf 2, in den ein zylindrisches Filterelement 3 eingesetzt ist, welches von dem zu reinigenden Fluid radial von außen nach innen durchströmt wird. Das gereinigte Fluid wird anschließend axial über einen Abströmkanal aus dem Inneren des Filterelements 3 abgeleitet. Das Filterelement 3 weist auf der dem Boden 2a des Gehäusetopfs 2 zugewandten Seite eine Stirnscheibe 4 auf, über die das Filterelement 3 an einem Federelement 5 abgestützt ist, das als Druckfeder ausgeführt ist und sich an der Innenseite des Gehäusebodens 2a abstützt.

In den Boden 2a des Gehäusetopfes ist eine zentrale Ausnehmung 6 eingebracht, die von einem Gehäuserand 7 begrenzt ist. In die Ausnehmung 6 ist als Anschlussbauteil eine als Stanzmutter 8 ausgeführte Buchse eingesetzt, die formschlüssig mit dem Rand 7 verbunden ist, welcher die Ausnehmung 6 begrenzt.

Der Gehäusetopf 2 besteht insbesondere aus Metall, wobei die Ausnehmung 6 im Wege des Stanzens in den Gehäuseboden 2a eingebracht ist.

In Fig. 2 ist die Stanzmutter 8 in vergrößerter Einzeldarstellung im Schnitt gezeigt. Die Stanzmutter 8 weist eine radial nach außen überstehende Schulter 10 auf, an deren Stirnfläche sich axial ein zylindrischer, überstehender Kragen 9 erhebt. Der Kragen 9 weist eine verhältnismäßig dünne Wandstärke auf, so dass es möglich ist, den Kragen 9 ohne Beschädigung des Hauptteils der Stanzmutter durch Umbiegen zu verformen.

Die Stanzmutter 8 ist des Weiteren mit einer zentralen Bohrung 11 versehen, die zur Ableitung von Flüssigkeiten dient. In die Bohrung 11 ist ein Innengewinde eingebracht. Der Kragen 9 weist einen Innendurchmesser auf, der den Durchmesser der Bohrung 11 übersteigt.

Im Übergang zwischen dem axialen Kragen 9 und der zugeordneten Stirnfläche der Schulter 10 befindet sich Dichtmaterial 12, welches zur Verbesserung der Abdichtung zwischen Gehäusetopf und Stanzmutter dient. Das Dichtmaterial 12 ist beispielsweise als Dichtmasse ausgeführt, welche unter Druck fließfähig ist und einen Spalt zwischen der Stirnfläche des Kragens 10 und dem Rand 7 des Bodens 2a bzw. dem Kragen 9 und dem Rand 7 ausfüllt. Die Dichtmasse kann vor dem Einsetzen der Stanzmutter aufgebracht werden. Anstelle einer Dichtmasse kann das Dichtmaterial 12 auch als Dichtring ausgeführt sein, der um den Kragen 9 gelegt ist.

Wie in Fig. 3 dargestellt, ist der Kragen 9 der Stanzmutter 8 im eingesetzten Zustand radial nach außen umgebogen, so dass der Rand 7 zwischen der Stirnfläche der Schulter 10 und der zugewandten Seitenfläche des Kragens 9 festgeklemmt ist. Auf diese Weise wird eine formschlüssige Verbindung zwischen der Stanzmutter 8 und dem Boden 2a des Gehäusetopfes 2 erreicht.

Zum Umformen des Kragens 9 ist eine Matrize 13 vorgesehen, die über die Innenseite des Gehäusetopfes 2 axial herangeführt wird und eine stirnseitige Kontur aufweist, die bei axialer Beaufschlagung ein Umbiegen des Kragens 9 radial nach außen bewirkt. Mit dem radialen Umbiegen wird zugleich der Rand 7, welcher die Ausnehmung 6 begrenzt, von dem Kragen 9 formschlüssig umgriffen.

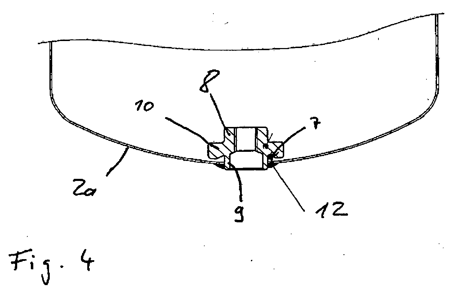

Fig. 4 zeigt eine Ausführungsform, bei welcher der Buchsenkörper der Stanzmutter 8 in das Innere des Gehäusetopfes einragt. Die Figur zeigt den Kragen in noch unverformtem Zustand. Um den Rand 7 des Bodens 2a ist auf der Außenseite des Gehäusetopfes 2 eine Dichtmasse 12 aufgetragen. Anstelle einer Dichtmasse kann das Dichtmaterial 12 auch als Dichtring ausgeführt sein, der um den Kragen 9 gelegt ist.

## Patentansprüche

1. Gehäusetopf zur Aufnahme eines Filterelements (3) in einer Filtereinrichtung (1), wobei in den Boden (2a) des Gehäusetopfes (2) eine Ausnehmung (6) eingebracht ist, in die eine Austragseinrichtung eingebracht ist, wobei die Austragseinrichtung eine Buchse (8) mit einem Formschlusselement (9) umfasst, das den die Ausnehmung (6) begrenzenden Rand (7) im Boden (2a) des Gehäusetopfes (2) formschlüssig hintergreift, **dadurch gekennzeichnet, dass** die Buchse als Stanzmutter (8) ausgebildet ist.

2. Gehäusetopf nach Anspruch 1, **dadurch gekennzeichnet, dass** das Formschlusselement als ein sich in Achsrichtung erstreckender, verformbarer Kragen (9) an der Buchse ausgebildet ist.

3. Gehäusetopf nach Anspruch 2, **dadurch gekennzeichnet, dass** der Kragen (9) radial nach außen gebogen ist und den Rand (7) übergreift.

4. Gehäusetopf nach einem der Ansprüche 1 bis 3, **dadurch gekennzeichnet, dass** zwischen dem Formschlusselement (9) und dem Rand (7) Dichtmaterial (12) angeordnet ist.

5. Gehäusetopf nach einem der Ansprüche 1 bis 4, **dadurch gekennzeichnet, dass** in die Buchse (8) eine Ablassschraube lösbar eingesetzt ist.

6. Gehäusetopf nach einem der Ansprüche 1 bis 5, **dadurch gekennzeichnet, dass** lediglich das Formschlusselement (9) der Buchse (8) in das Innere des Gehäusetopfes (2) einragt.

7. Gehäusetopf nach einem der Ansprüche 1 bis 6, **dadurch gekennzeichnet, dass** lediglich das Formschlusselement (9) der Buchse (8) aus dem Inneren des Gehäusetopfes (2) herausragt.

8. Filtereinrichtung mit einem Gehäusetopf (2) nach einem der Ansprüche 1 bis 7.

## Claims

1. Housing pot for accommodating a filter element (3) in a filtering device (1), wherein a recess (6) is realized in the bottom (2a) of the housing pot (2) into which a discharge device is introduced, wherein the discharge device surrounds a bushing (8) with a form-fit element (9) which engages in a positive-fit manner behind the edge (7) defining the recess (6) in the bottom (2a) of the housing pot (2), **characterized in that** the bushing is designed as piercing nut (8).

2. Housing pot according to claim 1, **characterized in that** the form-fit element is designed as deformable collar (9) at the bushing extending in axial direction.

3. Housing pot according to claim 2, **characterized in that** the collar (9) is bent radially outwardly and overlaps the edge (7).

4. Housing pot according to one of the claims 1 to 3, **characterized in that** a sealant (12) is disposed between the form-fit element (9) and the edge (7).

5. Housing pot according to one of the claims 1 to 4, **characterized in that** a drain plug is detachably inserted into the bushing (8).

6. Housing pot according to one of the claims 1 to 5, **characterized in that** only the form-fit element (9) of the bushing (8) protrudes into the interior of the housing pot (2).

7. Housing pot according to one of the claims 1 to 6, **characterized in that** only the form-fit element (9) of the bushing (8) protrudes outwardly from the interior of the housing pot (2).

8. Filtering device with a housing pot (2) according to one of the claims 1 to 7.

## Revendications

1. Pot de boîtier destiné à réceptionner un élément filtrant (3) dans un dispositif de filtration (1), un évidement (6) dans lequel est logé un dispositif de déchargement étant réalisé dans le fond (2a) du pot de boîtier (2), le dispositif de déchargement entourant une douille (8) avec un élément craboté (9) qui est en prise, sous forme d'assemblage craboté, avec le bord (7) limitant l'évidement (6) dans le fond (2a) du pot de boîtier (2), **caractérisé en ce que** la douille est exécutée en tant qu'écrou auto-poinçonneur (8).

2. Pot de boîtier selon la revendication 1, **caractérisé en ce que** l'élément craboté est exécuté sur la douille en tant que collet (9) s'étendant en sens axial et déformable.

3. Pot de boîtier selon la revendication 2, **caractérisé en ce que** le collet (9) est courbé vers l'extérieur en sens radial et chevauche le bord (7).

4. Pot de boîtier selon l'une des revendications 1 à 3, **caractérisé en ce qu**'une matière d'étanchéité (12) est placée entre l'élément craboté (9) et le bord (7).

5. Pot de boîtier selon l'une des revendications 1 à 4, **caractérisé en ce qu**'une vis de décharge est montée de manière amovible dans la douille (8).

6. Pot de boîtier selon l'une des revendications 1 à 5, **caractérisé en ce que** seul l'élément craboté (9) de la douille (8) entre à l'intérieur du pot de boîtier (2).

7. Pot de boîtier selon l'une des revendications 1 à 6, **caractérisé en ce que** seul l'élément craboté (9) de la douille (8) sort de l'intérieur du pot de boîtier (2).

8. Dispositif de filtration avec un pot de boîtier (2) selon l'une des revendications 1 à 7.
